# EUROPÄISCHE PATENTSCHRIFT

(11) **EP 2 592 729 B1**
(45) Veröffentlichungstag und Bekanntmachung des Hinweises auf die Patenterteilung: **02.05.2018**
(21) Anmeldenummer: 11188355.9
(22) Anmeldetag: 09.11.2011
(51) Int. Cl.: H02K 17/16, H02K 15/00

(54) **Läufer einer Asynchronmaschine mit Halteelement**
Rotor of an asynchronous machine with holding element
Rotor d'une machine asynchrone doté d'un élément de retenue

(43) Veröffentlichungstag der Anmeldung: 15.05.2013
(73) Patentinhaber: Siemens Aktiengesellschaft, 80333 München (DE)
(72) Erfinder: Dölz, Volker, 97616 Bad Neustadt (DE)

(56) Entgegenhaltungen:
- EP-A1- 0 618 662
- CH-A- 329 522
- DE-A1- 2 721 211
- JP-A- 2 273 059
- US-A- 5 990 595
- US-A1- 2011 074 240

## Beschreibung

Die Erfindung betrifft einen Kurzschlussläufer einer Asynchronmaschine, insbesondere Druckgussläufer mit in einem Blechpaket verlaufenden Nuten, wobei das Blechpaket auf einer Welle drehfest positioniert ist, die um eine Achse drehbar ist und mit einem Kurzschlusskäfig, der Kurzschlussstäbe in den Nuten und an den Stirnseiten des Blechpakets jeweils die Kurzschlussstäbe elektrisch verbindende Kurzschlussringe aufweist. Die Erfindung betrifft außerdem eine Asynchronmaschine mit einem derartigen Läufer und ein Verfahren zur Herstellung eines derartigen Läufers.

Asynchronmaschinen weisen normalerweise Käfigläufer bzw. Kurzschlussläufer auf. Dazu werden beispielsweise Stäbe in axial verlaufenden Nuten des Blechpakets des Läufers eingebracht. An den Stirnseiten des Blechpakets werden die axial aus dem Blechpaket austretenden Enden der Stäbe mit je einem Kurzschlussring elektrisch verbunden. Der sich damit ergebende Käfig wird bei größeren Achsen meist als gelötete oder geschweißte Ausführung mit Aluminium- bzw. Kupferstäben und Ringen realisiert. Bei kleineren Achshöhen ist dabei besonders vorteilhaft, den Kurzschlusskäfig als gegossene Ausführung herzustellen. Dies geschieht meist im Aluminium- oder Kupferdruckguss.

Bei vergleichsweise hohen Drehzahlen sind die beiderseits aus dem Blechpaket des Läufers ragenden Enden der Käfigstäbe und die mit ihnen verbundenen Kurzschlussringe sehr hoher Fliehkraftbeanspruchung ausgesetzt. Des Weiteren wird durch hohe Temperaturen, die zu einer thermischen Dehnung u.a. des Kurzschlussringes führen, und der angesprochenen hohen Fliehkräfte das Material am Übergang von Stab und Kurzschlussring sehr stark belastet, was letztendlich zu Rissen oder gar Materialbrüchen führen kann.

Es sind bereits folgende Lösungen für das Erzielen hoher Drehzahlen bzw. dem Schutz der Kurzschlussringe bei Käfigläufern bekannt.

So sind beispielsweise aus der DE 197 29 432 C1 Kappenringe an Kurzschlussringen angeordnet.

In der DE 195 21 700 A1 werden Schrumpfringe auf Kurzschlussringen beschrieben.

Aus der DE 27 21 211 A1 ist ein Zentrierring zur Abstützung der herausgeführten Kurzschlussstäbe und L-förmigem Kurzschlussring bekannt

Des Weiteren ist aus der WO 2007/000413 A1 eine Abstützung des Kurzschlussringes durch eine Endplatte bekannt. Ebenso sind Formbleche im Bereich der Kurzschlussringe, beispielsweise aus der WO 2007/000429 A1 bekannt.

Um einen Bruch am Übergang von Kurzschlussstab zu Kurzschlussring zu vermeiden, wird in der WO 2005/034316 A1 ein offener Nutbereich an dieser Nahtstelle vorgeschlagen.

Aus der EP 0 618 662 A1 ist ein Kurzschlussläufer einer Asynchronmaschine bekannt mit in einem Blechpaket verlaufenden Nuten, wobei das Blechpaket auf einer Welle drehfest positioniert ist und wobei die Welle um eine Achse drehbar ist, mit einem Kurzschlusskäfig, der Kurzschlussstäbe in den Nuten und an den Stirnseiten des Blechpakets jeweils die Kurzschlussstäbe elektrisch verbindende Kurzschlussringe aufweist, mit einem auf der Welle positionierten Paar von Halteelementen, wobei jeweils an den Stirnseiten des Blechpakets ein Halteelement angeordnet ist, wobei sich jedes dieser Halteelement in radialer Richtung scheibenartig erstreckt und in axialer Richtung eine Wand aufweist, die in axialer Richtung den Kurzschlussring überdeckt.

Aus der JP 2-273059 ist eine Asynchronmaschine mit einem schnelldrehendem Kurzschlussläufer bekannt, bei der, um Brüche des Kurzschlussrings bei hohen Geschwindigkeiten zu vermeiden zusätzliche Halteringe vorgesehen sind, die mit einem ringförmigen Steg die Kurzschlussringe radial außen überdecken.
Die vorliegenden Lösungen sind entweder besonders aufwändig zu realisieren, da sie aus einer Vielzahl unterschiedlicher Teile bestehen, oder sie eignen sich nur unzureichend für die gefährdete Übergangsstelle zwischen Kurzschlussstab und Kurzschlussring.
Ausgehend davon, liegt der Erfindung die Aufgabe zugrunde, einen Kurzschlussläufer einer Asynchronmaschine für vergleichsweise hohe Drehzahlen zu schaffen, der einfach herzustellen ist und der ebenfalls gestattet, auch vorhandene Kurzschlussläufer nachzurüsten.
Die Lösung der gestellten Aufgabe gelingt durch einen Kurzschlussläufer einer Asynchronmaschine mit den Merkmalen des Anspruchs 1.
Die Lösung der gestellten Aufgabe gelingt ebenso durch eine Asynchronmaschine nach Anspruch 5.
Ebenso gelingt die Lösung der gestellten Aufgabe durch ein Verfahren zur Herstellung eines Kurzschlussläufers einer Asynchronmaschine mit den Merkmalen des Anspruchs 6.
Durch den erfindungsgemäßen Aufbau des Kurzschlussläufers sind nunmehr zum Erreichen vergleichsweise hoher Drehzahlen des Kurzschlussläufers keine zusätzlichen Teile notwendig, da normalerweise Kurzschlussläufer bereits Scheiben zur Tarierung aufweisen. Erfindungsgemäß ist nunmehr das Halteelement derart ausgebildet, dass es sowohl den Kurzschlussring als auch einen vorgegebenen axialen Teilbereich des Blechpakets, der die Stäbe enthält, radial umgreift.

Bei hoher Fliehkraftbelastung des Kurzschlussläufers im Betrieb der Asynchronmaschine verhindert nunmehr das Halteelement eine plastische Verformung und einen Bruch des Kurzschlusskäfigs an der jeweiligen Übergangsstelle zwischen Kurzschlussstab und Kurzschlussring. Bei dem erfindungsgemäßen Kurzschlussläufer wird die hohe Scherbeanspruchung nunmehr an der Verbindungsstelle zwischen den Kurzschlussstäben und den Kurzschlussringen unmittelbar unterdrückt. Das Halteelement ist nunmehr als Scheibe mit einem umlaufenden Rand ausgeführt, der den äußeren Teil des Kurzschlussrings und einen Teilbereich der Stäbe hält. Die Scheibe wiederum, die auch speichenartig ausgeführt werden kann um Gewicht zu sparen, ist auf der Welle drehfest positioniert.

Das Halteelement weist somit eine scheibenartige Grundstruktur auf, die einen umlaufenden Rand aufweist. Dieser Rand ist zylindrisch und/oder Konisch ausgeführt. Bei anders gestalteter Manteloberfläche des Rotors, z.B. polygonförmig, ist die Ausgestaltung des Halteelements, also der Scheibe und des Randes den geometrischen Verhältnissen angepasst. Bei einer konischen Ausführung des Randes verjüngt sich dieser in seinem axialen Verlauf Richtung Mitte des Rotors. Vorteilhafterweise ist das Haltelement einstückig ausgebildet. Das Haltelement ist demnach aus einem Material und vorteilhafterweise in einem Arbeitsprozess hergestellt.

Durch die erfindungsgemäße Ausgestaltung des Kurzschlussläufers wird nunmehr der Kurzschlussring an der gefährdeten Übergangsstelle daran gehindert, sich aufgrund von thermischer Ausdehnung und/oder Fliehkraftbeanspruchungen radial nach außen zu bewegen und ggf. abzubrechen. Das Halteelement ist dabei vorteilhafterweise aus besonders hochfestem Material, wie zum Beispiel Stahl gefertigt.

Der axial erforderliche Abschnitt für den axialen Übergriff, ausgehend vom Kurzschlussring in das Blechpaket, wird beispielsweise durch eine Drehbearbeitung realisiert. Dazu werden die Kurzschlussringe als auch die Anfangs- und Endbereiche des Blechpakets mit den Stäben in einem vorgebbaren axialen Abschnitt überdreht oder abgefräst, so dass zu Beginn und am Ende des Blechpakets jeweils ein Absatz entsteht, auf den die zylindrische Wand des Randes bzw. axial erstreckende Finger formschlüssig positioniert werden.

Deshalb ist auch eine einfach Nachrüstung bereits bestehender Kurzschlussläufer mit derartigen Halteelementen möglich.

Da konstruktionsbedingt der Außendurchmesser des Kurzschlussläufers zur Einstellung des Luftspaltmaßes zwischen Rotor und Stator überdreht wird, entstehen durch die zusätzliche Bearbeitung im Bereich der Kurzschlussringe keine wesentlichen Mehrkosten.

Der Luftspalt der dynamoelektrischen Maschine, also der Asynchronmaschine bleibt konstant. Der Außendurchmesser von Kurzschlussläufer oder Blechpaket ändert sich durch die Halteelemente an den Stirnseiten des Blechpaketes nicht.

Vorteilhafterweise weist das Halteelement mit seinem scheibenartigen Abschnitt einen drehfesten Sitz an der Welle auf und kann somit zusätzlich zu der eigentlichen Funktion der Halterung von Kurzschlussring und Kurzschlussstab außerdem zum Wuchten eingesetzt werden.

Dabei kann an der vorgegebenen Scheibe nunmehr eine Negativwuchtung, durch Abbohrung von Material oder eine Positivwuchtung, durch Aufbringen von Wuchtgewichten realisiert werden. Die Erfindung sowie weitere vorteilhafte Ausgestaltungen der Erfindung werden anhand schematisch dargestellter Ausführungsbeispiele näher erläutert. Darin zeigen:
- FIG 1: einen schematischen Längsschnitt eines Asynchronmotors,
- FIG 2: einen schematischen Längsschnitt eines Kurzschlussläufers,
- FIG 3 bis 6: Ansichten des Halteelements,
- FIG 7: konische Wandung des Halteelements,
- FIG 8: Halteelement mit polygonförmigem Rand.

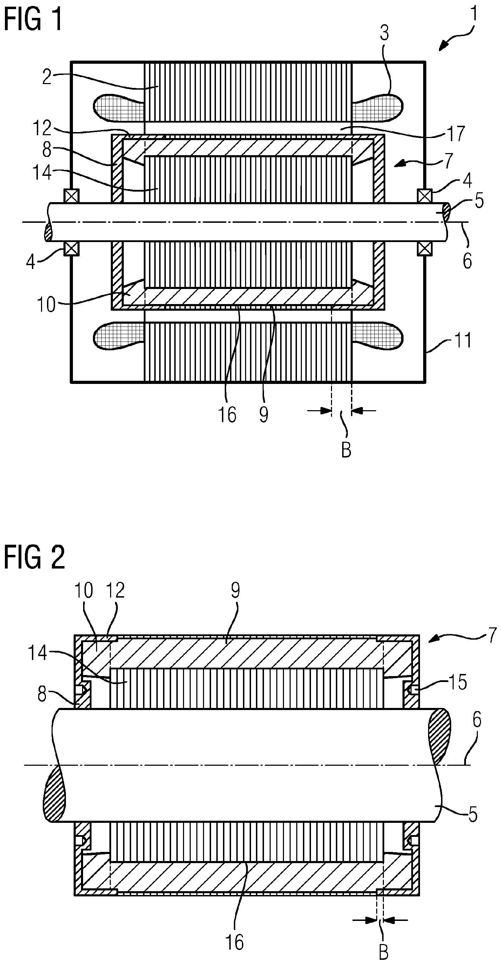

FIG 1 zeigt eine Asynchronmaschine 1 in einem Gehäuse 11, das einen Stator 2 aufweist, mit einem nicht näher dargestelltes Wicklungssystem, das an den Stirnseiten des Stators 2 Wickelköpfe 3 ausbildet. Von einem Luftspalt 17 vom Stator 2 beabstandet, befindet sich der Rotor 7. Bei dem Rotor 7 handelt es sich um einen Kurzschlussläufer, der u.a. ein Blechpaket 14 aufweist, das drehfest mit einer Welle 5 verbunden ist, wobei sich die Welle 5 um eine Achse 6 dreht. In Nuten 16 des Rotors 7 sind Kurzschlussstäbe 9 angeordnet, die an den Stirnseiten des Blechpakets 14 elektrisch in Umfangsrichtung miteinander durch einen Kurzschlussring 10 verbunden sind. Im vorliegenden Beispiel ist der damit aus Kurzschlussstäben 9 und Kurzschlussring 10 gebildete Kurzschlusskäfig in einem Druckgussverfahren aus Kupfer und/oder Aluminium hergestellt worden. Bei Asynchronmaschinen größerer Achshöhe, werden einzelne Kurzschlussstäbe 9 aus Kupfer mit ihren Kurzschlussringen an den Stirnseiten geschweißt oder verlötet.

Das Halteelement 8 kann selbstverständlich auch bei sogenannten Hybridläufern eingesetzt werden. Dabei befinden sich in den Nuten 16 des Blechpakets 14 Aluminiumstäbe, die in einem Kupferdruckgussverfahren in den Nuten 16 umgossen werden und wobei die Aluminiumstäbe in den Kurzschlussring 10 axial ragen.

Kurzschlussring 10 und ein Teil der Kurzschlussstäbe 9 am Ende und am Anfang des Blechpakets 14 werden erfindungsgemäß vor allem im Betrieb der elektrischen Maschine durch ein Halteelement 8 radial fixiert. Damit werden die im Betrieb der Asynchronmaschine auftretenden Fliehkraftbeanspruchungen und/oder die bei thermischen Dehnungen auftretenden Kräfte aufgenommen. Das Halteelement 8 weist einen scheibenähnlichen Abschnitt auf, der drehfest mit der Welle 5 verbunden ist. Radial außerhalb des Kurzschlussringes erstreckt sich ein Rand des Halteelements 8 in axialer Richtung und bildet dabei - in Umfangsrichtung betrachtet - vorzugsweise eine zylindrische Wand 12, die sich nicht nur radial über dem Kurzschlussring, sondern auch in die freigedrehten Abschnitte am Anfang und am Ende des Blechpakets 14 erstreckt.

Dadurch dass sich der zylindrische Rand in den freigedrehten Abschnitten befindet bleibt der Luftspalt 17 der Asynchronmaschine über die gesamte axiale Länge des Rotors 7 konstant. Die axiale Überdeckung B in das Blechpaket 14 des Kurzschlussläufers wird durch den Abdrehvorgang vorgegeben. Diese axiale Überdeckung B reicht in seiner axialen Ausdehnung von einer oder zwei Blechdicken des Blechpakets 14 bis zu ca. einem Drittel der axialen Länge des Rotors 7, je nach dynamischer Belastung des Kurzschlussringes 10 und beträgt eine axiale Überdeckung B von ca. einem Drittel einer Nuttiefe.

Der radiale Materialabtrag orientiert sich sowohl an den auftretenden Fliehkräften, die es zu beherrschen gilt, als auch an dem Material und den Dimensionen der Halteelemente.

Das Gehäuse 11 der Asynchronmaschine ist mittels Lagern 4 an der Welle 5 abgestützt.

Kühlung dieser Asynchronmaschine erfolgt beispielsweise durch eine Durchzugsbelüftung oder einen Innenkühlkreislauf, der aber nicht näher dargestellt wird.

FIG 2 zeigt einen Kurzschlussläufer, dessen Halteelement 8 zusätzliche Möglichkeiten der Tarierung aufweist. Dabei sind insbesondere im Bereich des Halteelementes 8 radial unterhalb des Kurzschlussrings 10 Möglichkeiten zur Negativwuchtung oder Positivwuchtung vorgesehen. Dabei kann in das Material des Halteelementes 8 durch Ausbohren bzw. durch Anbringen von zusätzlichen Elementen eine Unwucht des gesamten Rotors 7 kompensiert werden.

Auch in dieser Darstellung ist eindeutig zu sehen, dass eine axiale Überdeckung B des Halteelementes mit dem Blechpaket 14 eintritt.

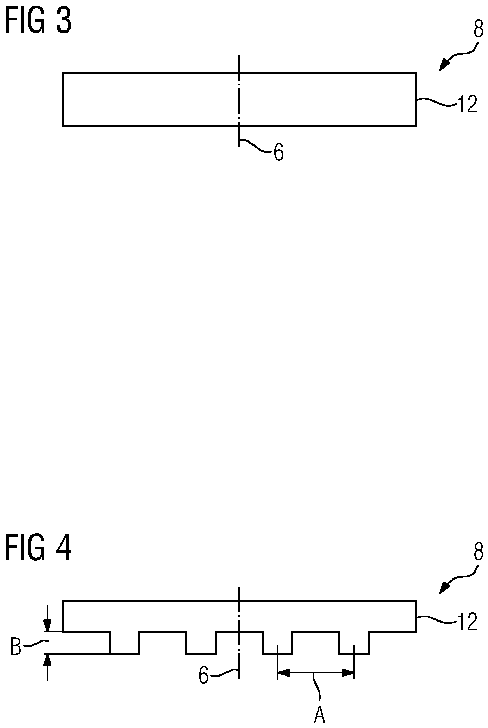

FIG 3 zeigt eine Seitenansicht des Halteelements 8, wobei das Halteelement 8 dabei neben der scheibenförmigen Ausgestaltung auch eine zylindrische Wand 12 aufweist, die sowohl Kurzschlussring 10 als auch die Endabschnitte der Kurzschlussstäbe 9 im Blechpaket 14 überdeckt.

FIG 4 zeigt in einer anderen Ausführungsform des Halteelements 8 einen Abschnitt mit zylindrischer Wandung sowie auch einen Abschnitt für die axiale Überdeckung B der Kurzschlussstäbe im Blechpaket 14. Dabei wird davon ausgegangen, dass eine Abdeckung der Kurzschlussstäbe 9 in den Nuten 16 auch nur dort notwendig ist, wo die oben angesprochenen Kräfte verstärkt wirken. Dabei wird nunmehr das Material für eine komplette zylindrische Wand 12, wie beispielsweise in FIG 3, eingespart.

Insbesondere ist dabei notwendig, dass der Abstand A zwischen zwei Fingern dem Abstand der Nuten auf dem Rotor 7 entspricht. Nur dann kann gewährleistet werden, dass die Finger auch die abgedrehten Blechabschnitte axial überdecken, in denen die Kurzschlussstäbe 9 liegen.

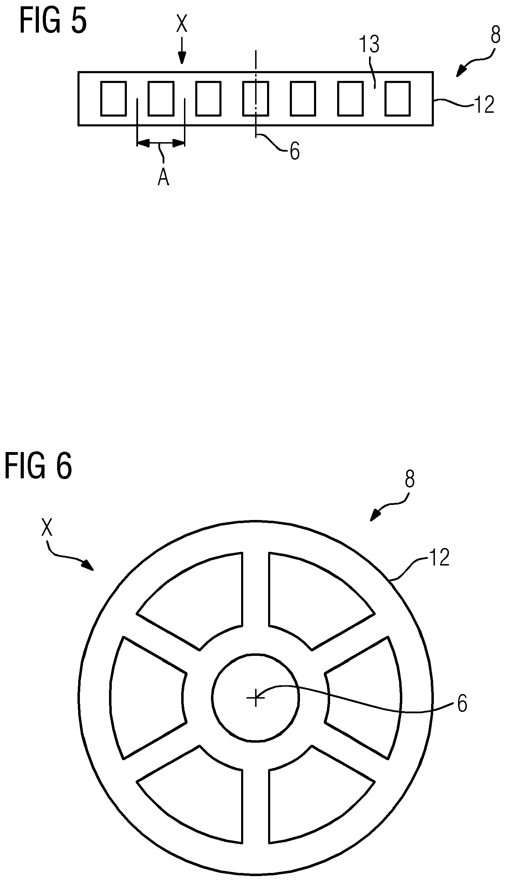

In einer weiteren Ausführungsform gemäß FIG 5 ist das Halteelement 8 derart ausgeführt, dass eine zylindrische Wand 12, axial betrachtet, nur abschnittsweise als Vollmaterial vorgesehen ist und sich nur zu Beginn und am Ende des Haltelements 8 befindet. In den Zwischenräumen, insbesondere in den Bereichen, wo die Kurzschlussstäbe in den freigedrehten Nuten liegen, sind Finger 13 vorgesehen, die auch als Stege zwischen Beginn und Ende des Haltelements 8 bezeichnet werden können .

In einer Ansicht gemäß FIG 6 wird nunmehr das Halteelement 8 axial betrachtet, wobei dabei die scheiben- bzw. speichenförmige Struktur hervortritt. Die speichenförmige Struktur gemäß FIG 6 ist dann besonders vorteilhaft, wenn innerhalb der Tarierscheibe Material eingespart werden soll. Auch hier sind Möglichkeiten der Negativ- oder Positivwuchtung möglich, wenn auch nicht in diesem Maße, wie sie bei einer Scheibe aus Vollmaterial vorgesehen sind.

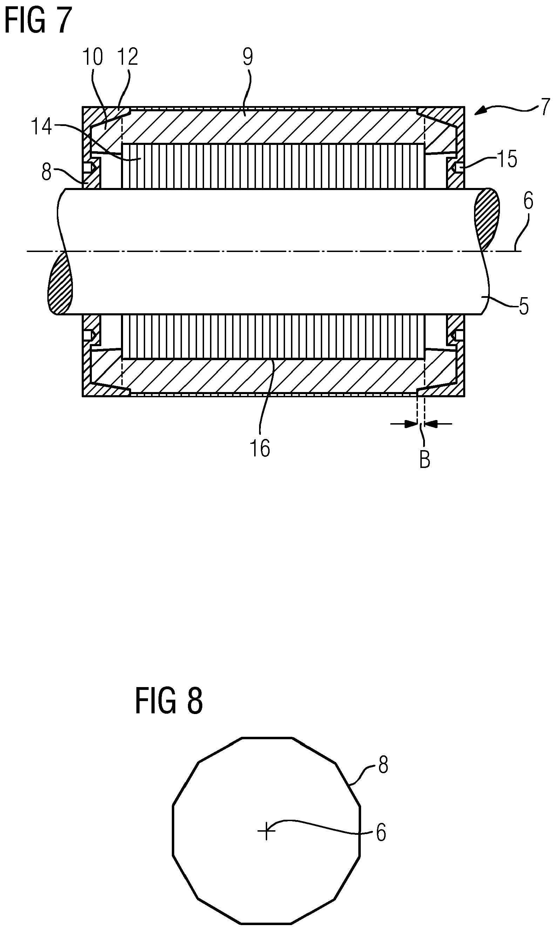

FIG 7 zeigt eine Asynchronmaschine 1 gemäß FIG 1, bei der das Haltelement 8, insbesondere dessen Rand konisch geformt ist. Dabei wird dem Umstand Rechnung getragen, dass die Fliehkräfte am Ende des Blechpakets 14 stärker einwirken und somit besser kompensiert werden können.

FIG 8 zeigt ein Halteelement 8 für einen polygonförmigen Rotor. Das Blechpaket 14 des Rotors wird dabei in dem relevanten Abschnitt nicht abgedreht sondern beispielsweise durch einen Fräsvorgang für die Positionierung des Haltelements 8 vorbereitet.

## Patentansprüche

1. Kurzschlussläufer einer Asynchronmaschine, insbesondere Druckgussläufer
- mit in einem Blechpaket (14) verlaufenden Nuten (16), wobei das Blechpaket (14) auf einer Welle (5) drehfest positioniert ist, wobei die Welle (5) um eine Achse (6) drehbar ist,
- mit einem Kurzschlusskäfig, der Kurzschlussstäbe (9) in den Nuten (16) und an den Stirnseiten des Blechpakets (14) jeweils die Kurzschlussstäbe (9) elektrisch verbindende Kurzschlussringe (10) aufweist,
- mit einem auf der Welle (5) positionierten Paar von Halteelementen (8), wobei jeweils an den Stirnseiten des Blechpakets (14) ein Haltelement (8) angeordnet ist, wobei sich jedes Halteelement (8) in radialer Richtung scheiben- oder speichenartig erstreckt und in axialer Richtung eine Wand (12) und/oder axial erstreckende Finger (13) aufweist, die in axialer Richtung neben dem Kurzschlussring (10) auch einen vorgebbaren axialen Abschnitt (B) der in den Kurzschlussring (10) mündenden Kurzschlussstäbe radial außen überdeckt, ohne den Außendurchmesser des Blechpakets (14) oder Kurzschlussläufers zu vergrößern, wobei sich das Halteelement (8) radial außerhalb des Kurzschlussrings in axialer Richtung in freigedrehte oder freigefräste Abschnitte am Anfang und am Ende des Blechpakets (14) erstreckt und wobei der axiale Abschnitt (B) ca. ein Drittel der Nuttiefe beträgt.

2. Kurzschlussläufer nach Anspruch 1, **dadurch ge**- **kennzeichnet,** dass das Halteelement (8) aus hochfestem Material, insbesondere Stahl ist.

3. Kurzschlussläufer nach Anspruch 1 oder 2, **dadurch gekennzeichnet, dass** das Halteelement (8) Möglichkeiten zum Negativ- oder Positivwuchten aufweist.

4. Kurzschlussläufer nach einem der vorhergehenden Ansprüche, **dadurch gekennzeichnet, dass** die Finger (13) einen in Umfangsrichtung vorgegebenen Abstand (A) aufweisen, der in Umfangsrichtung betrachtet dem Nutabstand auf dem Kurzschlussläufer entspricht.

5. Asynchronmaschine mit einem Läufer nach einem der vorhergehenden Ansprüche, insbesondere für Umlaufgeschwindigkeiten größer 90 m/s.

6. Verfahren zur Herstellung eines Kurzschlussläufers einer Asynchronmaschine (1), mit in einem Blechpaket (14) verlaufenden Nuten (16), **gekennzeichnet durch** folgende Schritte:
- Paketieren oder Stanzpaketieren eines Blechpakets (14) des Kurzschlussläufers,
- Positionieren eines Kurzschlusskäfigs im Blechpaket (14),
- drehfestes Verbinden von Blechpaket (14) des Kurzschlussläufers auf einer Welle (5),
- radialer Materialabtrag des Blechpakets (14) am Beginn und Ende des Blechpakets (14) **durch** Abdrehen oder Abfräsen,
- drehfestes Verbinden eines Halteelements (8) auf der Welle (5) derart, dass eine Wand und/oder Finger (13) sich axial über den Kurzschlussring (10) und den abgedrehten oder abgefrästen Teil des Blechpakets (14) oder des Kurzschlussläufers mit einer axialen Überdeckung (B) von ca. einem Drittel der Nuttiefe erstrecken, ohne den Außendurchmessers des Blechpakets oder des Kurzschlussläufers zu vergrößern.

7. Verfahren nach Anspruch 6, **dadurch gekenn- zeichnet,** dass der Rotor (7) durch das Halteelement (8) negativ oder positiv gewuchtet wird.

8. Verfahren nach Anspruch 6 oder 7, **dadurch ge- kennzeichnet,** dass der Kurzschlussläufer ein Druckgussläufer ist, wobei das Positionieren eines Kurzschlusskäfigs im Blechpaket (14) durch einen Druckgussvorgang und/oder durch eingelegte Kurzschlussstäbe aus Kupfer oder Aluminium erfolgt.

9. Verfahren nach Anspruch 6 oder 7, **dadurch ge**- **kennzeichnet,** dass der Kurzschlussläufer aus einzelnen Kurzschlussstäben (9) aus Kupfer hergestellt wird, die mit ihren Kurzschlussringen an den Stirnseiten geschweißt oder verlötet werden.

## Claims

1. Squirrel-cage rotor of an asynchronous machine, in particular a die-cast rotor
- with grooves (16) running in a laminated core (14), the laminated core (14) being positioned rotatably fixed on a shaft (5), it being possible for the shaft (5) to rotate about an axle (6),
- with a squirrel-cage winding which has rotor rods (9) in the grooves (16) and cage rings (10) respectively electrically connecting the rotor rods (9) on the end faces of the laminated core (14),
- with a pair of retaining elements (8) positioned on the shaft (5), a retaining element (8) being disposed at each end face of the laminated core (14), each retaining element (8) extending in a radial direction in the manner of a disk or spoke and in the axial direction having a wall (12) and/or axially extending fingers (13), which in the axial direction radially externally overlaps not only the cage ring (10) but also a definable axial section (B) of the rotor rods entering the cage ring (10), without increasing the external diameter of the laminated core (14) or squirrel-cage rotor, the retaining element (8) extending radially outside the cage ring in an axial direction into free-turned or free-milled sections at the start and at the end of the laminated core (14), and the axial section (B) being approximately one third of the depth of a groove.

2. Squirrel-cage rotor according to claim 1,
**characterised in that** the retaining element (8) is made of a high-tensile material, in particular steel.

3. Squirrel-cage rotor according to claim 1 or 2,
**characterised in that** the retaining element (8) has facilities for negative or positive balancing.

4. Squirrel-cage rotor according to one of the preceding claims,
**characterised in that** the defined spacing (A) of the fingers (13) in the circumferential direction corresponds, when viewed in the circumferential direction, to the spacing of the grooves on the squirrel-cage rotor.

5. Asynchronous machine with a rotor according to one of the preceding claims, in particular for rotational speeds above 90 m/s.

6. Method for manufacturing a squirrel-cage rotor of an asynchronous machine (1), with grooves (16) running in a laminated core (14), **characterised by** the following steps:
- stacking or in-die stacking of a laminated core (14) of the squirrel-cage rotor,
- positioning a squirrel-cage in the laminated core (14),
- connecting the laminated core (14) of the squirrel-cage rotor to a shaft (5) in a rotatably fixed manner,
- radial material abrasion of the laminated core (14) at the start and end of the laminated core (14) by turning or milling,
- connecting a retaining element (8) to the shaft (5) in a rotatably fixed manner such that a wall and/or fingers (13) extend axially over the cage ring (10) and the turned or milled part of the laminated core (14) or of the squirrel-cage rotor with an axial coverage (B) of approximately one third of the depth of a groove, without increasing the external diameter of the laminated core or squirrel-cage rotor.

7. Method according to claim 6,
**characterised in that** the rotor (7) is negatively or positively balanced by the retaining element (8) .

8. Method according to claim 6 or 7,
**characterised in that** the squirrel-cage rotor is a die-cast rotor, the positioning of a squirrel cage in the laminated core (14) being effected by a die-cast process and/or by inserted rotor rods made of copper or aluminium.

9. Method according to claim 6 or 7,
**characterised in that** the squirrel-cage rotor is manufactured from individual rotor rods (9) made of copper, which are welded or soldered by their cage rings to the end faces.

## Revendications

1. Rotor en court-circuit d'une machine asynchrone, notamment rotor coulé sous pression
- comprenant des encoches (16) s'étendant dans un paquet (14) de tôles, le paquet (14) de tôles étant mis en position en étant solidaire d'un arbre (5), l'arbre (5) pouvant tourner autour d'un axe (6),
- comprenant une cage de court-circuit, qui a des barreaux (9) de court-circuit dans les encoches (16) et, sur les côtés frontaux du paquet (14) de tôles, des anneaux (10) de court-circuit reliant électriquement respectivement les barreaux (9) de court-circuit,
- comprenant une paire d'éléments (8) de retenue mise en position sur l'arbre (5), un élément (8) de retenue étant disposé respectivement sur les côtés frontaux du paquet (14) de tôles, chaque élément (8) de retenue s'étendant à la manière d'un disque ou d'un rayon dans la direction radiale et ayant, dans la direction axiale, une paroi (12) et/ou des doigts (13) s'étendant axialement, qui recouvre à l'extérieur radialement, dans la direction axiale, outre l'anneau (10) de court-circuit, également une partie (B) axiale pouvant être donnée à l'avance des barreaux de court-circuit débouchant dans l'anneau (10) de court-circuit, sans agrandir le diamètre extérieur du paquet (14) de tôles ou du rotor en court-circuit, l'élément (8) de retenue s'étendant radialement à l'extérieur de l'anneau de court-circuit dans la direction axiale en des parties non tournées ou non fraisées au début et à la fin du paquet (14) de tôles et la partie (B) axiale représente environ un tiers de la profondeur de l'encoche.

2. Rotor en court-circuit suivant la revendication 1, **caractérisé en ce que** l'élément (8) de retenue est en un matériau très résistant, notamment en acier.

3. Rotor en court-circuit suivant la revendication 1 ou 2, **caractérisé en ce que** l'élément (8) de retenue a des possibilités d'équilibrage négatif ou positif.

4. Rotor en court-circuit suivant l'une des revendications précédentes, **caractérisé en ce que** les doigts (13) ont une distance (A) donnée à l'avance dans la direction périphérique, qui, considérée dans la direction périphérique, correspond à la distance entre encoches sur le rotor en court-circuit.

5. Machine asynchrone ayant un rotor suivant l'une des revendications précédentes, notamment pour des vitesses de rotation plus grandes que 90 m/s.

6. Procédé de fabrication d'un rotor en court-circuit d'une machine (1) asynchrone, ayant des encoches (16) s'étendant dans un paquet (14) de tôles, **caractérisé par** les stades suivants :
- mise en paquet ou mise en paquet avec poinçonnage d'un paquet (14) de tôles du rotor en court-circuit,
- mise en position d'une cage de court-circuit dans le paquet (14) de tôles,
- liaison solidaire en rotation du paquet (14) de tôles du rotor en court-circuit à un arbre (5),
- enlèvement radial de matériau du paquet (14) de tôles, au début et à la fin du paquet (14) de tôles, par enlèvement au tour ou par fraisage,
- liaison solidaire en rotation d'un élément (8) de retenue à l'arbre (5), de manière à ce qu'une paroi et/ou des doigts (13) s'étendent axialement sur l'anneau (10) de court-circuit et la partie tournée ou fraisée du paquet (14) de tôles ou du rotor en court-circuit avec un recouvrement (B) axial représentant environ un tiers de l'épaisseur de l'encoche, sans augmenter le diamètre extérieur du paquet de tôles du rotor en court-circuit.

7. Procédé suivant la revendication 6, **caractérisé en ce que** l'on équilibre négativement ou positivement le rotor (7) par l'élément (8) de retenue.

8. Procédé suivant la revendication 6 ou 7, **caractérisé en ce que** le rotor en court-circuit est un rotor coulé sous pression, la mise en position d'une cage de court-circuit dans le paquet (14) de tôles s'effectuant par une opération de coulée sous pression et/ou par l'insertion de barreaux de court-circuit en cuivre ou en aluminium.

9. Procédé suivant la revendication 6 ou 7, **caractérisé en ce que** l'on fabrique le rotor en court-circuit en barreaux (9) individuels de court-circuit en cuivre, qui sont soudés ou brasés aux côtés frontaux par leurs anneaux de court-circuit.
